Europäisches Patentamt

European Patent Office

Office européen des brevets

(11) Publication number: **0 434 467 A2**

# EUROPEAN PATENT APPLICATION

(21) Application number: 90314206.5

(51) Int. Cl.⁵: **C08G 18/65**, C08G 18/76

(22) Date of filing: 21.12.90

(30) Priority: 22.12.89 US 455671

(43) Date of publication of application:
26.06.91 Bulletin 91/26

(84) Designated Contracting States:
BE DE FR GB IT NL SE

(71) Applicant: THE DOW CHEMICAL COMPANY
2030 Dow Center Abbott Road P.O. Box 1967
Midland Michigan 48640-1967 (US)

(72) Inventor: Van der Wal, Hanno H.R.
De Eemshorn 19
NL-9931 BV Delfzijl (NL)

(74) Representative: Raynor, John et al
W.H. Beck, Greener & Co 7 Stone Buildings
Lincoln's Inn
London WC2A 3SZ (GB)

(54) A thermoplastic polyurethane and a process for the preparation thereof.

(57)   This invention relates to a process for preparing a thermoplastic polyurethane resin and the resin prepared thereof. In particular, the invention relates to a thermoplastic polyurethane resin, having enhanced demold and physical properties, which is prepared from a polyol, a dihydroxyl chain-extending agent and organic diisocyanate in the presence of from 0.02 to 0.5 mole per mole of polyol of an amine compound containing at least two primary amine groups.

EP 0 434 467 A2

# A THERMOPLASTIC POLYURETHANE AND A PROCESS FOR THE PREPARATION THEREOF

This invention relates to a process for preparing a thermoplastic polyurethane resin, more particularly it relates to a process for preparing a thermoplastic polyurethane resin from a reactive composition comprising an isocyanate, a polyol, a chain-extending agent and additionally a non-aromatic amine compound containing at least two primary amine groups.

Thermoplastic polyurethane resins are essentially linear polymers characterized in that they can be thermally processed by techniques such as melt-extrusion, compression molding and injection molding.

Typically, thermoplastic polyurethane resins are prepared by reacting a polyol, preferably a polyol having a high molecular weight of at least 500 and being nominally a diol, with an organic polyisocyanate, preferably a diisocyanate, usually in the presence of a low molecular weight difunctional chain-extending agent. The diol employed can be a polyester diol, a polyether diol or combinations thereof.

The type of high molecular weight diol selected can confer different characteristics and properties to the thermoplastic polyurethane (TPU) resin. Generally speaking, a TPU resin prepared from a polyester diol will display better toughness and oil/chemical resistance than one prepared from a polyether diol. Conversely, use of a polyether diol in preparing a TPU resin provides a product with better low temperature properties, resilience and resistance to hydrolytic degradation.

When preparing molded articles from a TPU resin or a blend comprising a TPU resin for viable economics and profitability, it is desirable to have a short residence, occupancy, time of the mold. To be able to operate with a short residence time requires being able to demold the article as soon as possible, without the article deforming or distorting significantly from its originally molded shape when demolded. It is therefore important that the TPU resin reaches a stage of sufficient rigidity and hardness or strength to maintain its original shape when demolded.

It is generally accepted that a TPU resin has a polymer morphology comprising "hard" and "soft" segments. It is thought that the time taken for the "hard" and "soft" segments to reorganize themselves after having been thermally processed influences the time in which a molded article may be demolded. Hard segments are molecular entities derived from reaction of the chain-extending agent with isocyanate. Soft segments are derived from the polyol/isocyanate reaction.

The concentration of hard segments within the thermoplastic polyurethane is determined by the molar concentration of the chain-extending agent. For a given quantity of chain-extending agent, the molar concentration and hence hard segment concentration declines with increasing molecular weight of the agent.

Physical properties of the thermoplastic polyurethane resin can be controlled to an extent through the chain-extending agent. Increasing the quantity of a chain-extending agent such as, for example, 1,4-butane-diol, increases hardness and strength of the resulting resin, but does not necessarily reduce the time to reach a demold point, and can be detrimental to other physical properties, e.g., elongation.

Combinations of chain-extending agents are frequently employed when it is necessary to enhance the flowability of such a resin, see for example, U.S. Patent 4,822,827. Combinations of different chain-extending reagents provide different hard segments within the resin. The flowability of such resins is enhanced because the ability of the hard segments to "crystallize out" on cooling is reduced.

It is generally accepted that to enhance demold properties of a thermoplastic polyurethane it is necessary to encourage the "crystallizing out" of the hard segments. It is therefore desirable to provide a thermoplastic polyurethane resin which can attain sufficient strength in a shorter period of time thus permitting earlier demolding, and yet retain overall acceptable physical properties.

Such a means of achieving a shorter demold time would be to accelerate the rate at which the TPU morphology is able to reorganize, by including agents in the molding process which encourage such reorganization. Such an agent might be for example a nucleating agent.

The publication, U.S. Patent 4,618,667 describes a thermoplastic polyurethane resin prepared from a urethane prepolymer wherein the prepolymer contains an organic polar compound dispersed therein. The dispersed compound functions as a nucleating agent to effect a more uniform phase separation of the hard and soft segments during the cure of the resin. The nucleating agents are organic compounds, preferably solids at ambient temperature, having a melting point higher than the cure temperature. Typically the nucleating agents are urethanes, ureas and allophanates.

The use of nucleating agents in this manner is not attractive as they must be dispersed within the prepolymer by use of an inert solvent which subsequently has to be removed prior to employment of the prepolymer containing nucleating agent for preparing a TPU resin. Further, when the solvent is removed, the resulting dispersion of nucleating agent in prepolymer must be a stable dispersion. Such dispersions can also suffer from having an increased viscosity over that of the prepolymer, without nucleating agent, which may give rise to processing difficulties when preparing a TPU resin.

An alternative approach to reducing the time required to reach the demold time is disclosed in U.S. Patent 4,261,946. This reference discloses the addition of a preformed thermoplastic polymer, a thermoplastic polyurethane in the extruder containing the polyol, chain-extending agent and isocyanate. Addition of the thermoplastic polymer is taught as increasing the rigidity of the resulting product by increasing the hard segment concentration.

It is therefore more desirable to provide a process for preparing a thermoplastic polyurethane resin from a polyol, a chain-extending agent and isocyanate, which has an enhanced demold performance, without the use of nucleating agents dispersed in prepolymers or other components of the reaction mixture or addition of other polymeric material to the reaction mixture and extrusion process.

It has now been discovered that thermoplastic polyurethane resins can be prepared from a reactive composition comprising a polyol, a chain-extending agent and an organic diisocyanate in the presence of an amine compound which provides for an enhancement in demold performance whilst retaining or improving overall physical properties of the resin.

In a first aspect, this invention is a process for preparing a thermoplastic polyurethane resin from a reactive composition comprising a polyol having an average molecular weight of from 500 to 5000 and an average functionality of from 1.8 to 2.25, a dihydroxyl chain-extending agent having a molecular weight of 400 or less and an organic diisocyanate characterized in that the composition additionally comprises a non-aromatic amine compound containing at least two primary amine groups in an amount of from 0.02 to 0.5 mole per mole of polyol present.

In a second aspect, this invention is a thermoplastic polyurethane resin prepared by contacting under reactive conditions a composition which comprises

(a) a polyol having an average molecular weight of from 500 to 5000 and an average functionality of from 1.8 to 2.25 ;

(b) a dihydroxyl chain-extending agent having a molecular weight of 400 or less ;

(c) an organic diisocyanate present in a quantity providing for an isocyanate reaction index of from 0.8 to 1.2 ; and

(d) a non-aromatic amine compound containing at least two primary amine groups in an amount of from 0.02 to 0.5 mole per mole (a) present.

In a third aspect, this invention is a thermoplastic polymer blend comprising a thermoplastic polyurethane resin characterized in that the resin is prepared by contacting, under reactive conditions, a composition which comprises

(a) a polyol having an average molecular weight of from 500 to 5000 and an average functionality of from 1.8 to 2.25 ;

(b) a dihydroxyl chain-extending agent having a molecular weight of 400 or less ;

(c) an organic diisocyanate present in an amount sufficient to provide an isocyanate reaction index of from 0.9 to 1.2 ; and

(d) a non-aromatic amine compound containing at least two primary amine groups in an amount of from 0.02 to 0.5 mole per mole (a) present.

Preparing the resin from a polyol, dihydroxy chain-extending agent and isocyanate in the presence of the amine compound unexpectedly provides for a resin with improved demold properties. Such improvement is surprising in that the amine compound can be considered as an additional chain-extending agent, and combinations of chain-extending agents, especially dihydroxyl chain-extending agents, are generally considered to be detrimental to demold performance.

As already mentioned above, this invention in one aspect relates to a process for preparing a thermoplastic polyurethane resin. The thermoplastic polyurethane resins prepared in accordance with the present invention are essentially linear polymers having a weight average molecular weight of at least 30,000, preferably at least 40,000, and more preferably at least 45,000. The thermoplastic polyurethane resins are characterized in that they contain few or no unreacted hydroxyl or isocyanate groups. Generally, the thermoplastic polyurethane resins can be further characterized in that they have a Shore Hardness of from at least 50A and up to 85D, and elongation percentage at break of up to 1000 percent. The thermoplastic polyurethane resins can be readily melt extruded, molded or injection molded to form goods and articles.

The amine compound is present in an amount sufficient to provide the desired improvement in demold performance. Advantageously the amine compound is present in an amount of from 0.02, preferably from 0.04, more preferably from 0.07 mole, and up to 0.5, preferably up to 0.35, and more preferably up to 0.25 mole per mole of polyol present. Use of quantities of amine compound outside the ranges given here may not give rise to improved demold performance and/or may provide system reactivities too great to be conveniently processed.

The amine compound employed in this present invention is a non-aromatic amine compound containing at least two primary amine groups and preferably exactly two primary amine groups. The amine compound can be hydrazine, a $C_{1-10}$ aliphatic amine, an alicyclic amine or a heterocyclic amine.

The preferred amine compounds are hydrazine and $C_{1-10}$ aliphatic amines, more preferably a $C_{2-10}$ aliphatic amine and, especially a $C_{2-6}$ aliphatic amine. Exemplary of such $C_{2-6}$ aliphatic amine compounds containing two primary amine groups are 1,2-diaminoethane, 1,3-diaminopropane, 1,4-diaminobutane, 1,5-diaminopentane and 1,6-diaminohexane.

The preferred aliphatic amine compounds for use in this present invention are 1,3-diaminopropane, 1,6-diaminohexane and especially 1,2-diaminoethane. The latter is sometimes referred to as ethylenediamine (EDA).

To provide a thermoplastic polyurethane resin by the process of this invention it is advantageous to employ the hereinabove described components, in addition to the amine compound, in the following proportions.

For each mole of polyol having a molecular weight of from 500 to 5000 that is present, advantageously the chain-extending agent is present in an amount of from 0.5 to 15, preferably from 1.0 to 13, and more preferably from 1.0 to 10 moles. The exact mole quantity of chain-extending agent employed needs to be established experimentally and depends on the desired hardness for the resulting resin and the molecular weight of the polyol. Lower mole quantities of chain-extending agent are employed with lower molecular weight polyols to obtain a given hardness.

The organic diisocyanate is present in such a quantity an amount sufficient to provide an overall reaction index of from 0.8, preferably from 0.9, more preferably from 0.95, and most preferably from 0.97, and up to 1.2, preferably up to 1.10, more preferably up to 1.05, and most preferably up to 1.03.

Preparing resins with a reaction index outside this range may not give a thermoplastic resin with the desirable physical properties and processing characteristics.

For the purpose of this invention, the isocyanate reaction index is defined as the number of isocyanate groups per active hydrogen atom present in the reactive composition. Further to this purpose, each primary amine group of the diamine compound is considered as bearing only one active hydrogen atom when determining the isocyanate quantity required.

The polyol employed in the process of this invention for manufacturing a thermoplastic polyurethane resin is essentially a linear hydroxyl-terminated material which has an average molecular weight of from 500 to 5000. The polyol molecular weight is preferably from 650 and more preferably from 1000, and preferably up to 4000 and more preferably up to 3000.

It is further an advantage if the polyol or polyol composition employed in the process of this invention has a nominal or average functionality of from 1.8 to 2.25, preferably from 1.9 to 2.2, and more preferably from 1.95 to 2.15. The term "average functionality" means the average number of active hydrogen atoms per molecule. Such active hydrogen atoms being associated with, in the case of polyols, the hydroxyl group.

Use of polyols having molecular weights or average functionalities outside these ranges may not confer good processability or physical properties, especially thermoplastic characteristics, to the resulting resin.

The polyol employed in the process of the invention can be a polyether polyol, a polyester polyol or mixtures thereof. When a polyether polyol is employed, advantageously it will have a molecular weight of from 500 to 3000. When a polyester polyol is employed, advantageously it will have a molecular weight of from 650 to 4000.

Small quantities of compounds having a molecular weight of 500 and more and containing less than an average of 1.8 active hydrogen atoms per molecule, or more than 2.5 active hydrogen atoms per molecule, may also be employed in combination with the polyol provided the average functionality is as discussed above. Use of such additional compounds may be desirable in particular circumstances for enhancement of physical properties of the resin.

The polyether polyols contemplated for use in this present invention can readily be prepared by polymerizing a cyclic ether such as, for example, tetrahydrofuran, or by reacting one or more alkylene oxides with an initiator containing an average of 2 active hydrogen atoms per molecule. Typically, the alkylene oxide will be ethylene oxide, propylene oxide, 1,2- or 2,3-butylene oxide and/or epichlorohydrin. Exemplary of suitable initiators are water, glycols such as ethylene glycol, propylene glycol, butylene glycol, hexylene glycol or dialkylene glycols. Suitable commercially available polyether polyols and preferred for use in this present invention include products sold by The Dow Chemical Company under the trademark VORANOL® such as VORANOL® 5287 and VORANOL® EP 1900.

The polyester polyols contemplated for use in the present invention are any of the conventional type polyester diols known to those skilled in the art and include poly(alkylene alkanedioate) diols and poly(oxycaproyl) diols.

The poly(alkylene alkanedioate) diols can suitably be prepared via well-known esterification techniques using a predetermined molar excess of an aliphatic glycol with relation to a dicarboxylic acid such as described

4

in, for example, U.S. Patent 2,423,823. Adipic acid is the preferred dicarboxylic acid. Illustrative of the aliphatic glycols which can be employed for the preparation of poly(alkylene alkanedioate) diols are ethylene glycol, 1,3-propylene glycol, 1,4-butanediol, 1,3-butylene glycol, 1,6-hexanediol and 1,12-dodecanediol.

The poly(oxycaproyl) diols contemplated for use in the present invention are well-known in the art and described in, for example, U.S. Patents 3,169,945 ; 3,248,417 ; 3,021,309 ; 3,021,310 ; 3,021,311 ; 3,021,312 ; 3,021,313 ; 3,021,314 ; 3,021,315 ; 3,021,316 and 3,021,317. A general procedure involves reacting a molar excess of epsilon-caprolacton with an initiator which contains two active hydrogen-containing groups being capable of opening the lactone ring whereby it adds as an open chain to the site of the active hydrogen-containing group.

Preferred species of the polyester diols contemplated by the present invention include poly(ethylene adipate) diols, poly(propylene adipate) diols, poly(oxycaproyl) diols and especially poly(butylene adipate) diols.

The chain-extending agent contemplated for use in the process of this invention, is a dihydroxyl chain-extending agent having a molecular weight of 400 or less, preferably from 60 to 400, more preferably from 60 to 300, and most preferably from 60 to 250.

The dihydroxyl chain-extending agent may comprise aliphatic, cycloaliphatic or aromatic dihydroxyl compounds, or diols, having from 2-10 carbon atoms. Illustrative of such diols are ethylene glycol, 1,3-propanediol, 1,5-pentanediol, 1,6-hexanediol, 1,2-propanediol, 1,3-butanediol, 1,4-butanediol, 2,3-butanediol, 1,3-pentanediol, 1,6-hexanediol, 3-methylpentane-1,5-diol, 1,4-cyclohexanediol, 1,4-cyclohexane dimethanol, and mixtures of two or more such diols. Compounds such as ethoxylated hydroquinone can also be employed as a chain-extending agent. The above-mentioned chain-extending agents can be used alone or in admixture with each other or with other compounds including diethylene glycol, dipropylene glycol, tripropylene glycol, ethanolamine, N-methyl diethanolamine, N-ethyl diethanolamine as well as ester diols obtained by esterifying adipic, azelaic, glutaric and the aliphatic dicarboxylic acids with aliphatic diols such as those exemplified above utilizing from 0.01 to 0.8 mole of acid per mole of diol. Also included as chain extending agents which can be used in the process are adducts obtained from an aliphatic diol or triol such as, for example, 1,4-cyclohexane dimethanol, neopentyl glycol, hexane-1,2-diol, ethylene glycol, butane-1,4-diol and trimethylolpropane with caprolactone in a mole ratio of from 0.01 to 2 moles of caprolactone per mole of diol or triol.

While any of the chain-extending agents exemplified above can be employed in the process of the invention, it is preferred to use 1,6-hexanediol, neopentyl glycol, 1,4-cyclohexane diol, ethylene glycol, bis(hydroxyethoxy)benzene, ethoxylated hydroquinone, diethylene glycol and, especially, 1,4-butanediol.

It is also possible to employ the chain-extending agent in combination with small amounts of compounds which are monofunctional or trifunctional compounds. Typically, the amount is not more than 0.2 and preferably not more than 0.1 mole per mole of polyol. Exemplary of monofunctional compounds are alcohols or chain-stopping agents, and of trifunctional compounds are glycerine or trimethylolpropane. Those additional compounds may be employed when it is desired to modify physical properties or processing characteristics of the thermoplastic polyurethane resin.

Any of the organic diisocyanates employed in the preparation of polyurethanes can be employed in preparing the TPUs by the process of this present invention. Such isocyanates may be aliphatic, aromatic or alicyclic isocyanates. Illustrative of such aromatic isocyanates are diphenylmethane diisocyanates including the 4,4'-isomer, the 2,4'-isomer and mixtures thereof, meta- and para-phenylene diisocyanates, chlorophenylene diisocyanates, $\alpha,\alpha'$-xylylene diisocyanate, 2,4- and 2,6-toluene diisocyanate and mixtures of these latter two which are available commercially, 1,5-naphthalene diisocyanate, toluidine diisocyanate. Illustrative of such aliphatic isocyanates are hexamethylene diisocyanate, isophorone diisocyanate and methylene bis(cyclohexylisocyanate) including the 4,4'-isomer and 2,4'-isomer.

Advantageously, the organic diisocyanate employed in the process of this invention is an aromatic diisocyanate preferably comprising diphenylmethane diisocyanate. Advantageously, the organic diisocyanate consists essentially of diphenylmethane diisocyanate wherein the isomer 4,4'-diphenylmethane diisocyanate is present in an amount of from 50 to 100, preferably from 75 to 100, and more preferably from 90 to 100 weight percent and the remainder will generally be the 2,4'-diphenylmethane diisocyanate isomer and modified forms of these diisocyanates.

The modified forms of diisocyanates are those forms of methylene bis(phenylisocyanate) which have been treated to render them stable liquids at ambient temperature. Such products include those which have been reacted with a minor amount (up to 0.2 equivalents per equivalent of a polyphenyl polyisocyanate) of an aliphatic glycol or mixture of aliphatic glycols ; such modified methylene bis(phenylisocyanates) are described in U.S. Patents 3,394,164 ; 3,883,571 ; 4,115,429 ; 4,118,411 and 4,299,347 ; and those wherein a minor amount of the diisocyanate has been converted to the corresponding carbodiimide as described in, for example, U.S. Patent 3,384,653. Mixtures of the above-described polyisocyanates can be employed if desired.

The thermoplastic polyurethane resins of this present invention can be prepared according to several different known methods. In the so-called "one-shot" method, the polyol, organic diisocyanate, dihydroxy chain-extending agent, amine compound and other additives, if any, are simultaneously mixed and reacted at an elevated temperature. Another method involves the so-called "prepolymer" method in which a part or all of the polyol is first reacted with the diisocyanate to give an isocyanate-terminated prepolymer which subsequently is contacted and reacted with any remaining part of the polyol, the chain-extending agent and amine compound. Variations of the above methods can also be used such as first reacting the chain-extending agent and/or amine compound with the diisocyanate and then reacting the intermediate product with the polyol.

The thermoplastic polyurethane resins of this present invention are preferably prepared by a "one-shot", "bulk" preparation process in the absence of processing solvents such as dimethylformamide. In such a process the reactants are combined at a temperature of typically from 160°C to 260°C. The resulting mixture is introduced into a suitable heated surface and maintained at a temperature of from 40°C to 190°C until its viscosity increases and it starts to solidify. Generally, the point of solidification can be attained in a period of from a few seconds to a few minutes, depending on the system reactivity. At this stage, the "solidified" reaction mass is a material which can be cooled, diced and stored or alternatively extruded into desired particle shapes or sizes. When an extruder is used as reactor, the obtained polymer can be extruded directly to give strings or films, or be handled directly by an underwater dicer.

It is often desirable, but not essential, to include a catalyst in the preparation of thermoplastic polyurethanes of the present invention. Any of the catalysts conventionally used in the art to catalyze or accelerate the reaction of an isocyanate with a reactive hydrogen-containing compound can be used for this purpose ; see for example, Saunders et al., "Polyurethanes, Chemistry and Technology, Part I", *Interscience*, pp. 228-232, New York (1963) ; and Britain et al., *J.Applied Polymer Science*, 4, 207-211 (1960). Such catalysts include organic and inorganic acid salts and organometallic derivatives of bismuth, lead, tin, iron, antimony, uranium, cadmium, cobalt, thorium, aluminum, mercury, zinc, nickel, cerium, molybdenum, vanadium, copper, manganese and zirconium, as well as phosphines and tertiary organic amines. Illustrative of such catalysts are stannous octoate, stannous oleate, dibutyltin dioctoate, dibutyltin dilaureate, cobalt naphthenate, tetramethyltin, triethylamine, triethylenediamine, N,N,N',N'-tetramethylenediamine, N,N,N',N'-tetraethylenediamine, N-methylmorpholine, N-ethylmorpholine, N,N,N',N'-tetramethylguanidine or N,N'-diethylethanolamine. The amount of the catalyst employed is that amount which will effectively catalyze the reaction of hydroxyl-containing compounds with the aromatic diisocyanate. The specific amount will depend on the particular reactants and catalyst being employed. Generally, the amount of the catalyst used is within the range of from 0.0001 to 0.1 percent by weight based on the total weight of the reactants.

Other additives, optionally, may be present in the process for preparing the thermoplastic polyurethane. Such additives include, for example, dyes, pigments, antioxidants, UV-stabilizers, processing aids like waxes, lubricants, antistatic agents, organic and inorganic fillers, glass fiber-reinforcing agents, or other plastics like ABS.

The thermoplastic polyurethane prepared by the process of this invention can, if required, be blended with other thermoplastic polymers, especially different thermoplastic polyurethane resins, for the purpose of preparing molded articles with modified properties.

Such a blend of thermoplastic material advantageously comprises a thermoplastic polyurethane resin prepared by the process of this invention in an amount of from 0.1 to 99.9, preferably from 1 to 50 and more preferably from 1 to 20, weight percent of total weight of the blend.

The thermoplastic polyurethane resin prepared by the process of this invention and thermoplastic polymer blends comprising the so-prepared resin can be used to fabricate a wide range of articles and goods such as, for example, automobile body parts, equipment housings, mechanical goods, gears and gaskets. It is particularly advantageous to use the resin produced by this invention where molded articles are prepared by, for example, injection molding, and where the period of time necessary to recycle the mold can be important to the economics and profit associated with preparing such an article.

The following examples are given to illustrate the invention and should not be interpreted as limiting it in any way. Unless stated otherwise, all component concentrations, units or mole equivalents are given in moles.

The physical properties of the thermoplastic polyurethanes, where reported, are observed according to the following procedures :

```
Tensile Strength and Elongation        - DIN 53455
Shore Hardness                         - DIN 53505
Tear Strength                          - DIN 53515
Melt Flow Index (226°C/1.2 kg/6 min)   - DIN 53735
```

Crystallization temperature is observed using a differential scanning calorimeter. A sample of the polymer is heated from -120°C to +250°C at 10°C/min. and the sample is then cooled to -120°C at 10°C/min. During the cooling cycle an exotherm is observed when crystallisation within the polymer morphology takes place. The reported crystallisation temperature is that associated with the maximum of the exotherm.

The cycle time reported in Table I is the minimum occupancy time of the casting within the mold required for the polymer to reach a sufficient strength permitting it to be demolded without disadvantageous consequences.

Mold cycle times are observed using a Netstal 235 injection molding machine, and the following operating parameters :

```
clamp force                        - 3000 kN
40 mm screw                        - L/D = 20
compression ratio                  - 1.8
shot weight                        - 56 g
mold temperature                   - 20°C
polymer injection temperature      - 190°C-210°C
```

Table I, illustrates polyether polyol-based thermoplastic polyurethanes incorporating ethylenediamine. Formulation for preparing the polymer and resulting physical properties are given.

Table II illustrates the preparation, and resulting physical properties, of similar polyether polyol-based thermoplastic polyurethanes incorporating 1,6-hexamethylenediamine.

Table III illustrates the preparation of a polyester polyol-based thermoplastic polyurethane incorporating ethylenediamine.

TABLE I

Polyether Polyol-based Thermoplastic
Polyurethanes Incorporating Ethylenediamine (1,2-diaminoethane)

| Elastomer | | 1 | 2 | 3 | 4 | A* | B* |
|---|---|---|---|---|---|---|---|
| Polyol[a] (moles) | | 1.0 | 1.0 | 1.0 | 1.0 | 1.0 | 1.0 |
| BDO[b] (moles) | | 2.10 | 2.10 | 2.10 | 2.12 | 2.25 | 2.20 |
| EDA[c] (moles) | | 0.08 | 0.04 | 0.10 | 0.08 | - | - |
| MDI[d] (Index) | | 1.0275 | 1.0275 | 1.01 | 1.003 | 1.0275 | 0.99 |
| Tensile strength (MPa) at | 50% elongation | 9.8 | 8.9 | 6.4 | 7.9 | 8.9 | 7.5 |
| | 100% elongation | 11.8 | 11.0 | 7.9 | 10.0 | 12.0 | 9.1 |
| | 300% elongation | 34.7 | 33.6 | 22.3 | 30.8 | 38.4 | 36.8 |
| Elongation at break (%) | | 410 | 450 | 504 | 470 | 418 | 510 |
| Shore Hardness A | | 94 | 94 | 94 | 93 | 94 | 93 |
| Tear Strength KN/m | | 149 | 144 | 128 | N.D. | 144 | N.D. |
| MFI (g) | | 14.9 | 20.0 | 15.8 | 19.4 | 7.4 | N.D. |
| Crystallization temperature (°C) | | 120 | 115 | 127 | 132 | 75 | 101 |
| Cycle Time (sec) | | N.D. | N.D. | 19 | N.D. | 28 | N.D. |

* Not an example of this invention    N.D. - Not determined

[a] A poly(oxytetramethylene)polyol, nominal functionality 2, molecular weight 1000

[b] Dihydroxyl chain-extending agent, 1,4-butanediol, molecular weight 90

[c] Amine compound, ethylenediamine (EDA)

[d] MDI, 4,4'-diphenylmethane diisocyanate content about 97 weight percent, the rest being essentially 2,4'-diphenylmethane diisocyanate

## TABLE II

### Polyether Polyol-based Thermoplastic
### Polyurethanes Incorporating 1,6-Hexamethylenediamine

| Elastomer | 5 | 6 | 7 | 8 |
|---|---|---|---|---|
| Polyol[1] (moles) | 1.0 | 1.0 | 1.0 | 1.0 |
| BDO[2] (moles) | 2.06 | 2.0 | 2.12 | 2.12 |
| HDA[3] (moles) | 0.14 | 0.2 | 0.08 | 0.08 |
| MDI[4] (Index) | 0.99 | 1.01 | 1.01 | 0.97 |
| Tensile strength (MPa) at 50% elongation | 7.0 | 7.2 | 7.6 | 7.3 |
| 100% elongation | 8.3 | 8.4 | 9.7 | 8.9 |
| 300% elongation | 16.5 | 13.9 | 40.0 | 18.1 |
| Elongation at break (%) | 465 | 350 | 480 | 545 |
| MFI (g) | 18.6 | 20.9 | 4.0 | 15.7 |
| Crystallization temperature (°C) | 78 | 124 | 81 | 92 |

[1] A poly(oxytetramethylene)polyol, nominal functionality 2, molecular weight 1000

[2] Dihydroxyl chain-extending agent, 1,4-butanediol (BDO), molecular weight 90

[3] Amine compound, 1,6-hexamethylenediamine (HDA)

[4] MDI, 4,4'-diphenylmethane diisocyanate content about 97 weight percent, the rest being essentially 2,4'-diphenylmethane diisocyanate

EP 0 434 467 A2

Table I indicates the properties of polyether polyol-based thermoplastic polyurethanes prepared by the process of this invention. As can be seen from the data, Examples 1 to 4 when compared to Comparative Examples A & B have similar overall physical properties, with the exception of the melt flow index. Generally, the polymers prepared by the process of this invention have a high melt flow index.

The polymers prepared by the process of this invention exhibit higher crystallization temperatures, even when isocyanate index is varied, than comparative polymers. The higher crystallization temperature of the polymer results in significantly improved demold performance as seen by the shorter cycle times required. This improvement is especially significant when viewed in combination with the higher melt flow index.

Table II shows similar property advantages can be obtained when employing 1,6-hexamethylenediamine. It can be seen that large mole quantities of HDA compared to EDA are required to obtain the similar advantages.

Table III shows that similar changes in crystallization temperature can be obtained when a polyester polyol is used in place of a polyether polyol.


## TABLE III

### Polyester Polyol-based Thermoplastic Polyurethanes Incorporating ethylenediamine


| Elastomer | 9 | C* |
|---|---|---|
| Polyol[1] (moles) | 1.0 | 1.0 |
| BDO[2] (moles) | 3.80 | 4.0 |
| EDA[3] (moles) | 0.2 | – |
| MDI[4] (Index) | 0.999 | 0.999 |
| Crystallization temperature (°C) | 127 | 67 |

\* Not an example of this invention

[1] A polybutylene adipate polyester polyol, molecular weight 2000

[2] Dihydroxyl chain-extending agent, 1,4-butanediol, molecular weight 90

[3] Amine compound, ethylenediamine

[4] MDI, 4,4'-diphenylmethane diisocyanate content about 97 weight percent, the rest being essentially 2,4'-diphenylmethane diixocyanate


## Claims

1. A process for preparing a thermoplastic polyurethane resin from a reactive composition comprising a polyol having an average molecular weight of from 500 to 5000 and an average functionality of from 1.8 to 2.25, a dihydroxyl chain-extending agent having a molecular weight of 400 or less and an organic diisocyanate characterized in that the composition additionally comprises a non-aromatic amine compound containing at least two primary amine groups in an amount of from 0.02 to 0.5 mole per mole of polyol present.

2. A process as claimed in Claim 1 wherein the amine compound contains two primary amine groups and comprises hydrazine, a $C_{1-10}$ aliphatic amine, an alicyclic amine or a heterocyclic amine.

3. A process as claimed in Claim 2 wherein the amine compound is a $C_{2-6}$ aliphatic amine and comprises 1,2-diaminoethane, 1,3-diaminopropane, 1,4-diaminobutane or 1,6-diaminohexane.

4. A process as claimed in any one of the preceeding claims wherein the amine compound is present in an amount of from 0.04 to 0.35 mole per mole of polyol.

5. A process as claimed in any one of the preceeding claims wherein the organic diisocyanate present in a quantity providing for an isocyanate reaction index of from 0.8 to 1.2 is an aromatic diisocyanate and comprises 4,4'-diphenylmethane diisocyanate in from 50 to 100 weight percent.

6. A process as claimed in any one of the preceeding claims wherein the chain-extending agent is 1,4-butanediol, neopentyl glycol, ethylene glycol, diethylene glycol, 1,4-cyclohexanediol, 1,3-propanediol or bis(hydroxyethoxy)benzene.

7. A process as claimed in any one of the preceeding claims wherein the polyol comprises a polyester polyol having an average molecular weight of from 650 to 4000.

8. A process as claimed in Claim 3 wherein a thermoplastic polyurethane resin is prepared from a composition comprising
    (a) a polyether polyol having an average molecular weight of from 500 to 3000 ;
    (b) a chain-extending agent comprising 1,4-butanediol, neopentyl glycol, ethylene glycol, diethylene glycol, 1,4-cyclohexanediol, 1,3-propanediol, or bis(hydroxyethoxy)benzene ;
    (c) an organic diisocyanate present in a quantity providing for an isocyanate reaction index of from 0.8 to 1.2 which is an aromatic diisocyanate and comprises 4,4'-diphenylmethane diisocyanate in an amount of from 50 to 100 weight percent ; and
    (d) a $C_{2-6}$ aliphatic amine compound in from 0.04 to 0.35 mole per mole of polyether polyol present.

9. A thermoplastic polyurethane resin prepared by contacting under reactive conditions
    (a) a polyol having an average molecular weight of from 500 to 5000 and an average functionality of from 1.8 to 2.25 ;
    (b) a dihydroxyl chain-extending agent having a molecular weight of 400 or less ;
    (c) an organic diisocyanate present in an amount providing for an isocyanate reaction index of from 0.8 to 1.2 ; and
    (d) a non-aromatic amine compound containing at least two primary amine groups in an amount of from 0.02 to 0.5 mole per mole (a) present.

10. A thermoplastic polymer blend which comprises a thermoplastic polyurethane resin as claimed in Claim 9.